Europäisches Patentamt

European Patent Office

Office européen des brevets

(11) Veröffentlichungsnummer: **0 324 095**
**A2**

## (12) EUROPÄISCHE PATENTANMELDUNG

(21) Anmeldenummer: 88120043.0

(22) Anmeldetag: 01.12.88

(51) Int. Cl.⁴: **B32B 31/00 , B29C 67/22**

(30) Priorität: 13.01.88 DE 3800677

(43) Veröffentlichungstag der Anmeldung:
19.07.89 Patentblatt 89/29

(84) Benannte Vertragsstaaten:
**BE ES FR GB IT NL SE**

(71) Anmelder: **REHAU AG + Co
Rheniumhaus
D-8673 Rehau(DE)**

(72) Erfinder: **Der Erfinder hat auf seine Nennung
verzichtet**

(54) **Verfahren zur Erzeugung einer Schaumstoffschicht auf einer Trägerleiste.**

(57) Die Erfindung betrifft ein Verfahren zur Herstellung einer kunststoffbeschichteten Trägerleiste. Dabei ist eine Schaumstoffschicht im wesentlichen gleichmäßiger Dicke und im wesentlichen gleichmäßiger Dichte aus einem geschlossenzelligen Schaum aus polymerem Werkstoff auf die mit einem Haftvermittler versehene Trägerleiste aufgebracht. Die Schaumstoffschicht besteht aus einem weich eingestellten, flexiblen Polymeren. Zwischen die Schaumstoffschicht und die Trägerleiste ist im gleichen Arbeitsgang mit der Erzeugung der Schaumstoffschicht auf die Trägerleiste eine im Querschnitt profilierte Ausgleichsschicht aus einem ungeschäumten, polymeren Werkstoff aufgebracht.

EP 0 324 095 A2

# VERFAHREN ZUR ERZEUGUNG EINER SCHAUMSTOFFSCHICHT AUF EINER TRÄGERLEISTE

Die Erfindung betrifft ein Verfahren zur Erzeugung einer Schaumstoffschicht von im wesentlichen gleichmäßiger Dicke aus geschlossenzelligem Schaum aus polymerem Werkstoff auf einer Trägerleiste, wobei die Trägerleiste auf der Seite der Schaumstoffschicht mit einem Haftvermittler versehen ist.

Aus der DE-OS 25 54 663 ist ein Verfahren zur Herstellung von Profilen bekannt, bei dem ein Metallprofil mit einem Kunststoffüberzug versehen wird. Dabei werden die zu bekleidenden Seitenwände des Metallprofils mit einem Haftvermittler beaufschlagt, der die Haftung des danach aufgetragenen Kunststoffprofils am Metallprofil bewirkt. Es handelt sich hierbei um ein Verbundprofil, bei dem der Kunststoffüberzug zum Schutz des metallischen Profils aufgebracht ist.

Aus der DE-OS 30 45 198 ist ein biegbares, wärmeisoliertes Leitungsrohr bekannt geworden, welches aus einem metallischen Innenrohr und einer thermisch isolierenden, extrudierten Hülle aus geschäumtem Kunststoff besteht. Der aufgeschäumte Kunststoff besteht aus einem Polyblend aus Polypropylen und einem elastifizierenden Kautschuk, welches in einem Extruder homogen aufgeschmolzen wird. In die Kunststoffschmelze wird danach unter hohem Druck ein Schäumgas, vorzugsweise ein halogenisierter Kohlenwasserstoff eingebracht, fein verteilt und in der Schmelze gelöst. Anschließend wird dieser Kunststoff auf das Metallrohr extrudiert und dabei die Schmelze aufgeschäumt. Mit diesem bekannten Verfahren läßt sich ein geschäumter, isolierender Kunststoffüberzug auf ein Metallrohr aufbringen, bei dem der geschäumte Kunststoffüberzug eine im wesentlichen gleichmäßige Dicke und eine feinporige, gleichmäßige Schaumstruktur aufweist.

Es ist ferner eine Sandwich-Struktur aus einem tragenden Metallband und einer mit diesem verbundenen Schaumschicht aus polymerem Werkstoff bekannt. Hierbei wird eine schäumfähige Paste aus weich eingestelltem Polyvinylchlorid auf ein mit einem Haftvermittler versehenes Blech aufgetragen. Die Paste wird danach angeliert und schäumt dabei auf. Durch die Wärmeapplikation beim Geliervorgang wird der Haftvermittler aktiviert und sorgt für einen festen Sitz der erzeugten Schaumschicht auf dem Metallträger. Diese Sandwichstruktur kann anschließend in Streifen geschnitten werden, die dann als Verpackungsstreifen bei der Palettenverpackung genutzt werden können.

Nachteilig ist dabei, daß die Schnittflächen der Sandwichstreifen keine geschlossene Haut aufweisen, sondern daß dort über die Streifenlänge gesehen, die Schaumporen offen liegen. Es können dort also Feuchtigkeit, Schmutz und dergleichen in die Poren eindringen und den Gebrauchswert solcher Bänder bzw. Strukturen negativ beeinflussen. Ein weiterer Nachteil wird darin gesehen, daß die Schaumoberfläche nahezu planeben ausgebildet ist. Hier können bei der Benutzung solcher Bänder im Freien Wasserflächen stehen bleiben, die sich bei der Handhabung nachteilig auswirken können.

Es ist ferner bekannt, daß treibmittelhaltige Polymerwerkstoffe bei der Extrusion zur Bildung von im Extrudat eingeschlossenen Gasbläschen und somit zur Bildung einer Schaumstruktur führen. Nach dem Austreten aus dem Extrusionswerkzeug bzw. nach dem Wegfall des Extrusionsdruckes ergibt sich je nach Temperatureinwirkung und Treibmittelanteil ein geschlossenporiger Schaum einer vorgegebenen Dicke und Dichte. Dabei ist das eingeschlossene Gas während und unmittelbar nach dem Schäumvorgang entsprechend der Extrusionstemperatur erwärmt.

Bei der Abkühlung ziehen sich die Gasbläschen je nach der Einwirkung der Kühltemperatur in ihrem Volumen zusammen und verändern entsprechend dem entstehenden Unterdruck und in Verbindung mit der Materialstabilität die Oberflächenkontur im Vergleich zur Querschnittsform unmittelbar nach dem Austritt aus dem Extrusionswerkzeug. Hierbei setzt der schneller abkühlende Profilbereich - das kann beispielsweise ein Bereich dünnerer Schaumstruktur sein - dem entstehenden Unterdruck den größeren Widerstand entgegen, so daß - bedingt durch die bessere Wärmeleitung des polymeren Werkstoffes - gegenüber dem eingeschlossenen Gas die durch das Extrusionswerkzeug vorgegebene Raumform in diesen Bereichen weitgehend erhalten bleibt.

Der langsamer oder später abkühlende Querschnittsbereich des Profils - in der Regel der dickere Bereich der Schaumstoffschicht - setzt dem sich innerhalb des Querschnittes bildenden Unterdruck in Abhängigkeit von der Abkühlzeit den geringeren Widerstand entgegen und wird dementsprechend in einer Vakuumeinwirkung mehr oder weniger zusammengezogen. Diese Volumenabnahme ergibt entsprechend der Veränderung des ursprünglichen Gesamtvolumens des Schaumquerschnittes bestimmte Einfallstellen an der Oberflächenkontur des Profils und bewirkt eine zum Profilkern hin zunehmende Dichte der Schaumstruktur.

Dieser Nachteil ist vermehrt dort zu beobachten, wo Schaumquerschnitte unterschiedlicher Dicke erzeugt werden. Hier sind aus den angegebenen Gründen die Einfallstellen im Bereich der dickeren Profilstruktur besonders ausgebildet.

Der Erfindung liegt die Aufgabe zugrunde, eine mit Schaumkunststoff beschichtete, planebene Trägerleiste anzugeben, welche einen profilierten Aufbau der Kunststoffbeschichtung über ihrer Mittellinie ausweist. Dabei soll die Sohaumstruktur ohne Einfallstellen in möglichst gleichmäßiger Dicke auf dem Fertigprodukt erhalten sein.

Erfindungsgemäß wird dazu vorgeschlagen, daß zwischen die Schaumstoffschicht und die Trägerleiste im gleichen Arbeitsgang mit der Erzeugung der Schaumstoffschicht auf die Trägerleiste eine im Querschnitt profilierte Ausgleichsschicht aus einem ungeschäumten, polymeren Werkstoff aufgebracht wird.

Die erfindungsgemäße Schaumstoffschicht ist ein polymeres Material, das sich im herkömmlichen Sinne nicht kalibrieren läßt. Schaumstoffschichten aus polymerem Material, die sich im herkömmlichen Sinne kalibrieren lassen, sind beispielsweise hart eingestellte, mit Schäummitteln versehene Polyvinylchloridschichten, bei denen beispielsweise ein geschäumter Innenkern mit glatten Außenflächen durch unmittelbare Kalibrierung des Profils nach dem Austritt aus der Extruderdüse erzielbar sind.

Mit herkömmlichen Mitteln nicht kalibrierbare, schäumbare Kunststoffmaterialien sind beispielsweise weiche, flexible Polymere wie thermoplastisches Polyurethan (TPU), weich eingestelltes Polyvinylchlorid, thermoplastische Polyolefinelastomere, niedrigdichtes Polyethylen (LDPE), Ethylen-Vinyl-Acetat (EVA), thermoplastische Polyesterelastomere, thermoplastische Polyamidelastomere, PVDC-EVA-Elastomere und dergleichen. Diese Materialien sind mit herkömmlichen Methoden deswegen nicht kalibrierbar, weil sie beim Aufschäumen wegen ihrer Flexibilät und Elastizität keine tragfähige Haut bilden, welche die Reibungskräfte, die bei der Kalibrierung entstehen, aufnehmen könnte.

Diesen Nachteil bei der Herstellung von geschäumten, profilierten Querschnittsformen unter Verwendung der angegebenen Kunststoffmaterialien beseitigt die Erfindung mit dem Vorschlag, auf die Trägerleiste eine im Querschnitt profilierte Ausgleichsschicht aus einem ungeschäumten, polymeren Werkstoff aufzutragen. Diese Ausgleichsschicht kann in der Form auf die Trägerleiste aufgebracht werden, die das Gesamtprofil auf der Kunststoffseite im abgekühlten Zustand aufweisen soll.

Die erfindungsgemäße Sandwich-Struktur besitzt also über der Trägerleiste keine planebenen Aufbauten. Vielmehr ist auf dem planebenen Träger eine profilierte Ausgleichsschicht aus ungeschäumtem, polymerem Werkstoff aufgebracht, wobei die Profilierung in ihrer Figuration dem endgültigen Aussehen der fertigen Sandwich-Struktur weitgehend entsprechen kann. Wenn also diese endgültige Struktur einen gewölbten Querschnitt aufweisen soll, dann soll die Ausgleichsschicht eine entsprechende Wölbung aufweisen, auf die die Schaumschicht unter Beibehaltung der vorgegebenen Wölbung mit annähernd gleichbleibender Dikke aufgebracht werden muß. Das gleiche ergibt sich dann bei anderen, gewünschten Querschnittsformen.

Wenn - wie erfindungsgemäß vorgeschlagen - zusammen mit dem Auftragen der Ausgleichsschicht die nach außen abschließende Schaumstoffschicht aufgebracht wird, so ist vorausgesetzt, daß diese Schaumstoffschicht im Augenblick der Aufbringung eine annähernd gleichmäßige Dicke aufweist. Diese annähernd gleichmäßige Dicke bewirkt, daß eine gleichmäßige Abkühlung der aufgebrachten Schaumstoffschicht von außen nach innen erfolgen kann. Dies wäre dann nicht der Fall, wenn die Ausgleichsschicht bei gleichem Endquerschnitt der Sandwich-Struktur zuvor nicht auf die zugeordnete Oberfläche der Trägerleiste aufgebracht worden wäre. In diesem Falle würde eine durchgehende Schaumstoffschicht unterschiedlicher Dicke vorliegen, die beispielsweise an den freien Kanten der Trägerleiste ihre dünnsten Bereiche und über der Mittellinie der Trägerleiste den dicksten Aufbaubesitzen könnte. Die vorgeschilderten Probleme bei der Abkühlung würden eine solchen Aufbau derart beeinflussen, daß über der Mittellinie der Trägerleiste die Schaumbeschichtung mehr oder weniger stark einfallen würde. Dies ist aber bei jedem Endprodukt unerwünscht.

Der erfindungsgemäße Aufbau führt zu einer weitgehend gleichmäßigen Abkühlung der aufgebrachten Schaumstoffschicht und- bewirkt damit eine gleichmäßige Volumenänderung der Gasbläschen und somit die Erhaltung der gewünschten und durch das Extrusionswerkzeug vorbestimmten Oberflächenkontur.

Vorteilhaft bestehen die Schichten aus geschäumtem und ungeschäumtem polymeren Werkstoff aus solcher Zusammensetzung, daß beide Werkstoffe ohne Zuhilfenahme von Haftvermittlern miteinander verschweißen können. Auf diese Weise lassen sich die Vorteile des Koextrusionsverfahrens beim Aufbau des erfindungsgemäßen Sandwich-Querschnitts verwirklichen.

Im fertig abgekühlten Zustand zeigt das Profil der Erfindung an der Oberfläche der Schaumstoffschicht eine griffige Außenhaut in geschlossener Form, die durch eine entsprechend eingestellte Schaumdichte, verbunden mit einer leichten Rauhigkeit erzielbar ist. Vorzugsweise wird hierbei eine Dichte zwischen 10 und 90 % des ungeschäumten polymeren Materials entsprechend den gegebenen Belastungsverhältnissen eingestellt. Hier gilt im übrigen die bekannte Regel, daß die Griffigkeit der Oberfläche, d.h. die Oberflächenstruktur mit abhängig von der Dichte des verwendeten Schaumstoffmaterials ist. Je niedriger die Dichte wird, desto griffiger bzw. rauher wird die Oberfläche.

Wesentliches Merkmal des erfindungsgemäßen Schichtenaufbaus ist die Verschweißung der polymeren Schaumstoffschicht mit der kompakten polymeren Ausgleichsschicht. Hierbei ist vorteilhaft die Schweißfestigkeit im Schichtenbereich zwischen beiden Polymerschichten höher als die Reißfestigkeit der Schaumstoffschicht.

Die Haftung der polymeren, kompakten Ausgleichsschicht zur Oberfläche der Trägerleiste kann über den speziell gewählten Haftvermittler so eingestellt werden, daß bei einem Schälversuch die Kompaktschicht zerstört wird, d.h. Teile dieser Schicht zumindest partiell am Stahlband haften bleiben.

Für die Haftung der beiden Polymerschichten ist es vorteilhaft, wenn die Schmelzeführung in der polymeren Schaumstoffschicht im Extrusionswerkzeug so erfolgt, daß ein Aufschäumen erst nach dem Verlassen des Extrusionswerkzeuges möglich ist. Beginnt die Zellbildung bereits im Extrusionswerkzeug, so wird die Verschweißung der beiden polymeren Schichten deutlich schlechter. Dies ist darauf zurückzuführen, daß dann vor dem eigentlichen Zusammentreffen der Grenzbereiche beider Schichten in diesem Bereich der Schaumstoffschicht bereits die Zellbildung eingesetzt hat, so daß die Verschweißung der beiden Schichten nicht mehr vollflächig erfolgen kann.

Mit dem erfindungsgemäßen Verfahren lassen sich mehrschichtige Sandwich-Profile herstellen, bei denen von einer Trägerleiste ausgehend beliebige Profilierungen des polymeren Schichtenaufbaus erzeugt werden können, ohne daß an der Oberfläche, d.h. im Bereich der geschäumten Polymerschicht, abkühlungsbedingte Einfallstellen mit ihren nachteiligen Eigenschaften sichtbar werden. Die gleichmäßige Abkühlung der im wesentlichen in gleicher Dicke vorliegenden geschäumten Polymerschicht ergibt ferner den Vorteil, daß über den Querschnitt dieser Schicht gesehen, eine Schaumstruktur annähernd gleicher Dichte vorliegt.

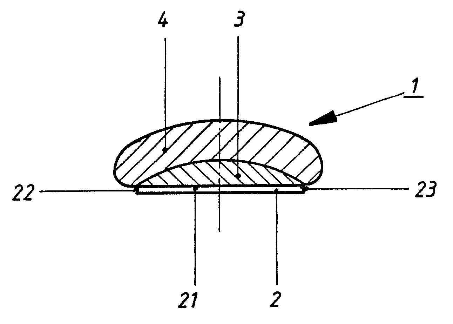

In der Zeichnung ist eine Querschnittsdarstellung eines erfindungsgemäßen Profilaufbaus schematisch wiedergegeben. Das Mehrschichtenprofil 1 besteht dabei aus dem Trägerband 2, welches auf der mit dem Haftvermittler versehenen Oberseite 21 die Ausgleichsschicht 3 aus polymerem, kompaktem Material trägt. Die Ausgleichsschicht 3 ist in einer gewölbten Form profiliert, wobei die Wölbung von den freien Kanten 22, 23 des Trägerbandes 2 ausgehend zur Mitte ansteigt. Es handelt sich bei der dargestellten Ausführungsform also lediglich um eine einfach gewölbte Ausgleichsschicht 3. Diese Ausgleichsschicht 3 kann in beliebigen, in der Zeichnung nicht dargestellten Formen an ihrer freien Oberfläche profiliert sein.

Über der Ausgleichsschicht 3 liegt die Schaumstoffschicht 4, welche an den freien Endbereichen 22, 23 des Trägerbandes 2 ihren Anfang nimmt und sich von dort aus in annähernd gleicher Dicke und annähernd gleichbleibender Schaumdichte über die Ausgleichsschicht 3 erstreckt. Die Schaumstoffschicht 4 besitzt über ihre gesamte außenliegende Oberfläche eine geschlossene Außenhaut, so daß die Poren die Schaumstruktur nicht sichtbar sind. Die Oberfläche der Schaumstoffschicht 4 ist entsprechend der eingestellten Dichte griffig ausgestaltet.

## Ansprüche

1. Verfahren zur Herstellung einer kunststoffbeschichteten Trägerleiste, wobei eine Schaumstoffschicht im wesentlichen gleichmäßiger Dicke und im wesentlichen gleichmäßiger Dichte aus einem geschlossenzelligen Schaum aus polymerem Werkstoff auf die mit einem Haftvermittler versehene Trägerleiste aufgebracht wird, dadurch gekennzeichnet, daß die Schaumstoffschicht aus einem weich eingestellten, flexiblen Polymeren besteht, und daß zwischen die Schaumstoffschicht und die Trägerleiste im gleichen Arbeitsgang mit der Erzeugung der Schaumstoffschicht auf die Trägerleiste eine im Querschnitt profilierte Ausgleichsschicht aus einem ungeschäumten, polymeren Werkstoff aufgebracht wird.

2. Verfahren nach Anspruch 1, dadurch gekennzeichnet, daß die Schichten aus geschäumtem und ungeschäumtem polymeren Werkstoff ohne Zuhilfenahme von Haftvermittlern miteinander verschweißt werden.